# EUROPEAN PATENT APPLICATION

(11) **EP 3 520 606 A1**
(43) Date of publication of application: **07.08.2019**
(21) Application number: 18198919.5
(22) Date of filing: 05.10.2018
(51) Int. Cl.: A01J 7/02

(54) **MECHANIZED MILKING MACHINE INCLUDING A DEVICE FOR INJECTION OF A PRODUCT FOR RINSING THE PIPE FOR ROUTING OF THE MILK TO THE MILK TANK**

(30) Priority: 06.02.2018 FR 1850995
(71) Applicant: Boumatic LLC, Madison, WI 53716 (US)
(72) Inventor: CABON, Alain, 29400 Bodilis (FR)
(74) Representative: Regimbeau

(57) **Abstract**

The invention relates to a mechanized milking machine (10).

According to the invention, such a milking machine (10) includes a device (17) for injection under pressure of at least one product for rinsing the pipe (15; 48) for routing of the milked milk from a claw (11) to a milk storage container, and for rinsing this claw (11) and the liners (13) which are connected to it, which is mounted on a section of said routing pipe (15;48) between vacuum cutoff means (16) and said claw (11), said injection device (17) including an enclosure (22) connected to a source of said rinsing product, an opening (410) for communication with said pipe, a flap valve (25; 41) that is mobile between two positions:
- a rest position, in which said flap valve (25; 41) is withdrawn from said opening for communication with said pipe, and said opening is freed;
- a closing position, in which said flap valve (25; 41) closes the opening for communication with the pipe,
and means for actuation of said flap valve.

## Description

### 1. Field of the invention

The field of the invention is the field of agricultural machinery.

More precisely, the invention relates to a mechanized milking machine.

### 2. Prior art

Machines for mechanized milking by suction of the milk using a vacuum are well known to the person skilled in the art. They generally include a milk claw that collects the milk in a collector, on which two or four milking liners are connected. A vacuum pump makes it possible to suction the milk from the collector and to route it through a pipe to a storage tank, commonly called milk tank.

In order to eliminate the film and/or deposits that form on the walls of the routing pipe and on the claw and the liners, an idea has been to use a water intake on a bypass of the milk routing pipe. The cutting off and the sending of a flow of water in the pipe are controlled by a pneumatic jack, which pinches or releases the bypass made of flexible material.

A disadvantage of this known technique is that it is complex to implement and that it considerably increases the cost of a milking machine.

Another disadvantage is that the bypass can rupture after being crushed numerous times.

Another disadvantage of this known technique is that it is necessary to make sure that the jack is maintained.

### 3. Aims of the invention

An aim of the invention is to remedy the disadvantages of the prior art mentioned above.

More precisely, an aim of the invention is to provide a milking technique that limits the proliferation of pathogenic germs and that avoids contamination of the collected milk.

An aim of the invention is also to provide such a technique that is simple to implement.

Another aim of the invention is to provide such a technique that has a low production cost.

Another aim of the invention is to provide such a technique that is reliable.

### 4. Presentation of the invention

These aims and others that will appear below are achieved by means of mechanized milking machine including:
- a plurality of milking liners connected to a milk claw;
- a pipe connected to means for generating a vacuum, which is intended for routing the milked milk from the claw to a milk storage container, said pipe including means for cutting off the vacuum in the portion of said pipe between said claw and said means for cutting off the vacuum.

According to the invention, such a mechanized milking machine includes a device for injection under pressure of at least one product for rinsing said pipe, said claw and said liners, which is mounted on a section of said routing pipe between said vacuum cutoff means and said claw, said injection device including an enclosure connected to a source of said rinsing product, an opening for communication with said pipe, a flap valve that is mobile between two positions:
- a rest position, in which said flap valve is withdrawn from said opening for communication with said pipe, and said opening for communication with said pipe is freed;
- a closing position, in which said flap valve is flattened against a seat formed on the internal wall of the enclosure and closes the opening for communication with the pipe,
and means for actuation of said flap valve.

Thus, in a novel manner, the invention proposes using a device for injection of a rinsing product making it possible, after the milking of each animal of the herd, to eliminate the residues connected with the circulation of the milk, containing fatty materials and lactose, which are deposited on the walls of the milk routing pipe, of the claw and of the milking liners.

It is appropriate to note that, in the context of the invention, the actuation of the flap valve can result from the application of the vacuum in the milk routing pipe or from an overpressure exerted on the flap valve, or can be obtained by means of an electromechanical device.

In a particular embodiment of the invention, said means for actuation of said flap valve include a port formed in said enclosure, making it possible to maintain the surface of said flap valve turned towards said port at atmospheric pressure, or to pressurize the surface of said flap valve turned towards said port.

The flap valve can thus be moved between the rest position and the closing position under the action of the difference in pressure exerted on each of its surfaces, namely the difference in pressure between atmospheric pressure and the vacuum created in the milk routing pipe, or the difference in pressure between an overpressure exerted on the surface of the flap valve turned towards the port and atmospheric pressure or the vacuum present in the milk routing pipe.

In an advantageous embodiment of the invention, the surface of the flap valve turned towards the port can be pressurized simply by injecting compressed air through the port.

In a particular embodiment of the invention, said flap valve is formed in a deformable membrane mounted in a sealed manner on the internal wall of said enclosure.

According to an advantageous aspect of the invention, said at least one rinsing product is water, and said source is a water distribution network.

In variants, alkaline or acidic substances can be added to the water in order to improve the effectiveness of the rinsing product.

Advantageously, said enclosure is connected to a compressed air compressor intended for injecting compressed air into said pipe, between said vacuum cutoff means and said claw, into said claw and into said liners, in order to dry them.

Preferably, said injection device and said vacuum cutoff means are 0.1 to 10 cm apart.

In variants of this embodiment of the invention, it is also possible to consider using for the distance between said injection device and said vacuum cutoff means a distance of between 10 and 30 centimeters.

According to an advantageous embodiment of the invention, an electrovalve is mounted between said enclosure and said source of rinsing product, and it includes means for controlling the opening of said electrovalve.

According to an advantageous aspect of the invention, said means for controlling the opening of said electrovalve are arranged to open said electrovalve over predetermined periods, spaced apart in time, so as to inject said rinsing product into said enclosure in bursts.

In a particular embodiment of the invention, said means for controlling the opening of said electrovalve include means for checking the position of said flap valve that are capable of detecting when said flap valve is in said rest position.

The invention also relates to a device for injection under pressure of at least one rinsing product into a pipe for routing milked milk of a mechanized milking machine, which is intended for being mounted on a section of said routing pipe between means for cutting off the vacuum in said pipe and a milk claw connected to said pipe, characterized in that it includes:
- an enclosure connected to a source of said rinsing product;
- an opening communication with said pipe;
- a flap valve that is mobile between two positions:
   - a rest position, in which said flap valve is withdrawn from said opening for communication with said pipe, and said opening for communication with said pipe is freed;
   - a closing position, in which said flap valve is flattened against a seat formed on the internal wall of the enclosure and closes the opening for communication with the pipe,
- means for actuation of said flap valve.

### 5. List of the figures

Other features and advantages of the invention will appear more clearly upon reading of the following description of two embodiments of the invention, given as illustrative and non-limiting examples, and of the appended drawings in which:
- Figure 1 represents an embodiment example of a mechanized milking machine according to the invention;
- Figure 2 is a detail view in cross section of the device for injection of at least one rinsing product equipping the mechanized milking machine presented in reference to Figure 1, in rest position;
- Figure 3 is a cross-sectional view of the device for injection of at least one rinsing product in a position of closing of the opening for communication with the milk routing pipe of the milking machine presented in reference to Figure 1;
- Figure 4 is a cross-sectional view of another embodiment example of a device for injection of at least one rinsing product according to the invention.

### 6. Detailed description of the invention

### 6.1 Embodiment example of the invention

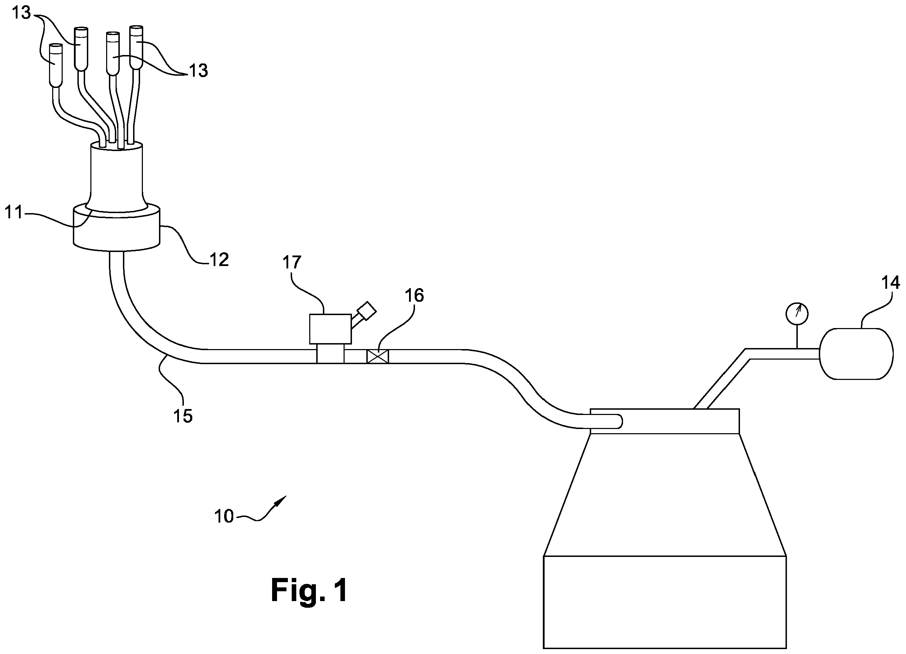

Illustrated in Figure 1 is an embodiment example of a mechanized milking machine 10 according to the invention for cows or buffalo cows.

In a manner known in itself, this milking machine 10 includes a claw 11 equipped with a collector 12, on which four milking liners 13 are mounted.

In a variant of this particular embodiment of the invention, just two milking liners can be connected to the claw 11, for example, for milking ewes and goats.

A vacuum pump 14 makes it possible to suction the milked milk through a milk routing pipe 15 connected to the collector 12 in order to direct it to a milk tank 16 intended for storage and preservation of the milk.

This milk routing pipe is equipped with a vacuum cutoff valve 16 and with a device 17 for injection of water for rinsing the pipe 15, the claw 11 and the liners 13. In this particular embodiment of the invention, the valve 16 and the injection device 17 are 3 cm apart.

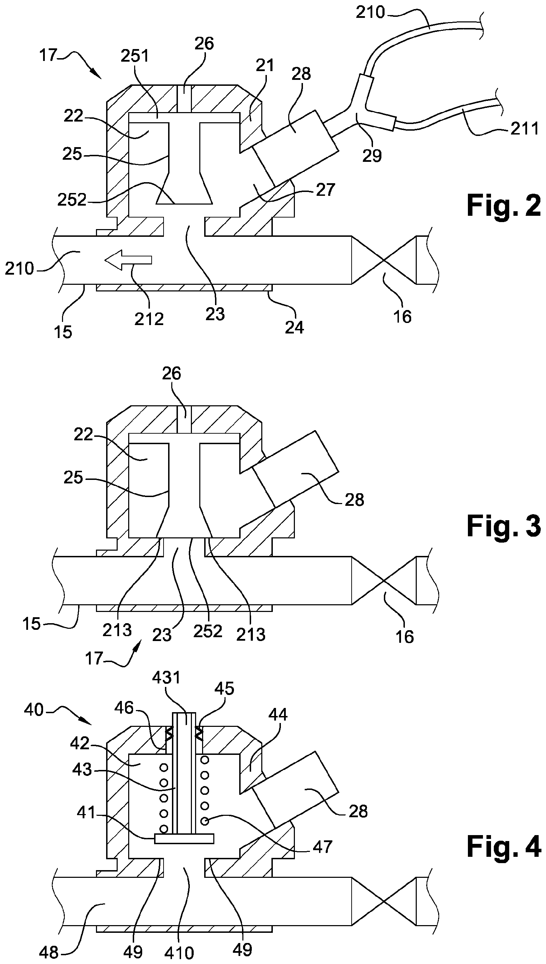

As can be seen in Figure 2, in a detail view of the injection device 17, said injection device has a body 21 delimiting an enclosure 22 communicating with the interior of the pipe 15 through an opening 23 and a hole pierced in the pipe 15 facing the opening 23. Under the enclosure 22, the body 21 also has a tubular portion 24 which forms a sleeve around the exterior wall of the pipe 15.

A flexible membrane 25, substantially having the shape of a glove finger, is glued or welded, at its base 251, on the wall of the enclosure 22 facing the opening 23. A port 26 formed in the body of the enclosure 22, substantially in the center of the circle defined by the base of the membrane 25, makes it possible to introduce air inside of the membrane of which the surface turned towards the port 26 is then subjected to atmospheric pressure.

Thus, when the vacuum has been cut off in the portion 210 of the pipe 15 between the valve 16 and when the milking liners 13 are detached from the teats of the animal, which allows outside air to penetrate in the portion 210 of the pipe, the device 17 is in a rest position as illustrated in Figure 2, in which the distal part 252 of the membrane 25, forming a flap valve, is subjected on both sides to atmospheric pressure and is at equilibrium, withdrawn from the opening 23.

An inclined pipe 27 leads into the enclosure 22. An electrovalve 28 (represented by dotted lines in Figure 2) is mounted on this pipe 27.

A "Y" connector 29 is mounted at the entrance of the electrovalve 28. Of the branches of this connector, which are equipped with non-return valves, one is connected to a flexible tube 210 connected to the drinking water network, and the other is connected to a compressed air tube 211 connected to a compressed air compressor. This enables the injection into the routing pipe 15 either of water for rinsing the pipe, the claw and the liners, or of air for drying these components.

In a variant of this particular embodiment of the invention, it is possible to consider using for the electrovalve 28 a three-way electrovalve on which the tubes 210 and 211 are directly connected.

The opening of the electrovalve 28 enables one to bring about the flow of water or to project air into the enclosure, which will then propagate through the opening 23 into the pipe 15 in the direction of the claw 11, in the direction indicated by the arrow 212.

It should be noted that, since the injection device 17 is close to the vacuum cutoff valve 16, a small quantity of water will penetrate into the portion of the pipe located between the device 17 and the valve 16 when the valve 16 is closed.

Represented in Figure 3 is the device 17 when the milking liners 13 are placed on the teats of a cow and the cutoff valve 16 is opened in order to suction the milk coming out of the teats. Under the action of the vacuum, the distal part 252 of the membrane 25, forming a flap valve, moves in the direction of the pipe 15 and is flattened against an annular portion of the wall of the enclosure surrounding the communication opening 23, which forms a seat 213 for the flap valve 252. In this position, the flap valve 252 closes the opening 23 in a sealed manner, and the milk flowing in the pipe 15 cannot penetrate into the enclosure 22.

When the cow is milked and the liners are withdrawn from the teats, the vacuum cutoff valve 16 is closed, and air penetrates into the pipe 15, which pushes the membrane 25 back towards the interior of the enclosure and frees the opening 23. A programmable automaton then controls the opening of the electrovalve 28 in order to inject water in bursts into the pipe 15, through the enclosure 22.

In this embodiment of the invention, this automaton is programmed so that the electrovalve opens and closes successively several times over approximately 15 seconds, in order to inject water in bursts the pipe 15.

### 6.2 Another embodiment example of the invention

Figure 4 illustrates another example of a device for injection of a rinsing product according to the invention.

In this particular embodiment of the invention, a stiff flap valve 41 is mounted in a sliding manner in the enclosure 42 of the injection device 40 and is attached on a hollow rod 43 leading out of the body 44 of the injection device 40. A packing assembly 45 ensures the sealing of the enclosure 42 at the site of the passage of the rod 43 through the port 46 formed in the body 44 of the injection device.

A spring 47 makes it possible to return the flap valve 41 to the rest position illustrated in Figure 4.

It should be noted that the hollow 431 in the rod 42 makes it possible to maintain a pressure equal to atmospheric pressure on the surface of the flap valve on which the rod 43 is attached.

The generation of a vacuum in the pipe 48 draws the flap valve against its seat 49, under the action of the difference in pressure created between the two surfaces of the flap valve, and said flap valve then closes the communication opening 410 between the enclosure 42 and the milk routing pipe 48.

## Claims

1. A mechanized milking machine (10) which includes:
- a plurality of milking liners (13) connected to a milk claw (11);
- a pipe (15; 48) connected to means (14) for generating a vacuum, which is intended for routing the milked milk from the claw (11) to a milk storage container, said pipe (15; 48) including means (16) for cutting off the vacuum in the portion of said pipe between said claw (11) and said vacuum generation means (14),
**characterized in that** it includes a device (17) for injection under pressure of at least one product for rinsing said pipe (15; 48), said claw (11) and said liners (13), which is mounted on a section of said routing pipe between said vacuum cutoff means (16) and said claw (11), said injection device including an enclosure (22; 42) connected to a source of said rinsing product, an opening (410) for communication with said pipe, a flap valve (25; 41) that is mobile between two positions:
- a rest position, in which said flap valve (25; 41) is withdrawn from said opening for communication with said pipe, and said opening for communication with said pipe is freed;
- a closing position, in which said flap valve (25; 41) is held against a seat (213; 49) formed on the internal wall of the enclosure and closes the opening for communication with the pipe,
and means for actuation of said flap valve (25; 41).

2. The mechanized milking machine according to claim 1, **characterized in that** said means for actuation of said flap valve include a port (26; 46) formed in said enclosure, making it possible to maintain the surface of said flap valve (25) turned towards said port at atmospheric pressure, or to pressurize the surface of said flap valve (25; 41) turned towards said port.

3. The mechanized milking machine according to claim 2, **characterized in that** said flap valve is formed in a deformable membrane (25) mounted in a sealed manner on the internal wall of said enclosure (22).

4. The mechanized milking machine according to any one of claims 1 to 3, **characterized in that** said at least one rinsing product is water, and **in that** said source is a water distribution network.

5. The mechanized milking machine according to any one of claims 1 to 4, **characterized in that** said enclosure (22) is connected to a compressed air compressor intended for injecting compressed air into said pipe (15; 48), between said vacuum cutoff means (16) and said claw (11), into said claw (11) and into said liners (13), in order to dry them.

6. The mechanized milking machine according to any one of claims 1 to 5, **characterized in that** said injection device (17) and said vacuum cutoff means (16) are 0.1 to 10 cm apart.

7. The mechanized milking machine according to any one of claims 1 to 6, **characterized in that** an electrovalve (28) is mounted between said enclosure (22) and said source of rinsing product, and **in that** it includes means for controlling the opening of said electrovalve (28).

8. The mechanized milking machine according claim 7, **characterized in that** said means for controlling the opening of said electrovalve (28) are arranged to open said electrovalve (28) over predetermined periods, spaced apart in time, so as to inject said rinsing product into said enclosure (22) in bursts.

9. The mechanized milking machine according to either of claims 7 and 8, **characterized in that** said means for controlling the opening of said electrovalve (28) include means for checking the position of said flap valve (25; 41) that are capable of detecting when said flap valve (25; 41) is in said rest position.

10. A device (17) for injection under pressure of at least one rinsing product into a pipe (15; 48) for routing milked milk of a mechanized milking machine (10), which is intended for being mounted on a section of said routing pipe between means (16) for cutting off the vacuum in said pipe (15; 48) and a milk claw (11) connected to said pipe (15; 48), **characterized in that** it includes:
- an enclosure (22) connected to a source of said rinsing product;
- an opening (410) for communication with said pipe;
- a flap valve (25; 41) that is mobile between two positions:
- a rest position, in which said flap valve (25; 41) is withdrawn from said opening for communication with said pipe, and said opening for communication with said pipe is freed;
- a closing position, in which said flap valve (25; 41) is held against a seat (213; 49) formed on the internal wall of the enclosure and closes the opening for communication with the pipe,
- means for actuation of said flap valve (25; 41).
